# EUROPÄISCHE PATENTSCHRIFT

(11) **EP 2 960 547 B1**
(45) Veröffentlichungstag und Bekanntmachung des Hinweises auf die Patenterteilung: **19.02.2020**
(21) Anmeldenummer: 15164158.6
(22) Anmeldetag: 20.04.2015
(51) Int. Cl.: F16H 47/04, F16H 39/04, F16H 57/00, F16H 39/02, F16H 61/4183

(54) **GETRIEBEANORDNUNG**
GEARBOX ASSEMBLY
SYSTÈME D'ENGRENAGE

(30) Priorität: 27.06.2014 DE 102014109066
(43) Veröffentlichungstag der Anmeldung: 30.12.2015
(73) Patentinhaber: CLAAS Industrietechnik GmbH, 33106 Paderborn (DE)
(72) Erfinder: Eisold, Torsten, 33102 Paderborn (DE); Ratzke, Michael, 33332 Gütersloh (DE); Verhorst, Jan-Willem, 59555 Lippstadt (DE)
(74) Vertreter: CLAAS Gruppe

(56) Entgegenhaltungen:
- EP-A1- 2 503 190
- US-A- 3 884 095

## Beschreibung

Die Erfindung betrifft eine Getriebeanordnung gemäß dem Oberbegriff des Anspruchs 1, umfassend zumindest ein hydrostatisches Getriebe, bei dem zur Übertragung von Antriebsleistung eine als Pumpe wirkende hydrostatische Einheit mit einer als Motor wirkenden hydrostatischen Einheit hydraulisch verbunden ist.

Getriebeanordnungen dieser Art sind aus dem Stand der Technik für sich gesehen bekannt. Beispielsweise offenbart die DE 28 15 632 ein hydrostatisches Getriebe mit zwei über eine gemeinsame Anschlussplatte zu einer Baueinheit verbundenen hydrostatischen Einheiten. Zur Verringerung abgestrahlter Betriebsgeräusche, die von laufenden Kompressionen und Dekompressionen des Hydraulikmediums innerhalb der hydrostatischen Einheiten (Axialkolbenmaschinen) verursacht werden, wird in DE 28 15 632 vorgeschlagen, die Baueinheit durch eine elastische Lagerung mechanisch von einem Außengehäuses des Getriebes zu entkoppeln. Daneben sei beispielhaft auf EP 2 503 190 verwiesen, wo zur Verringerung von Betriebsgeräuschen einer hydromechanischen Getriebeanordnung offenbart wird, deren hydrostatischen Getriebeteil über Dämpfungselemente nachgiebig gegenüber dem Getriebegehäuse zu lagern.

Landwirtschaftliche Fahrzeuge wie beispielsweise Traktoren weisen in zunehmendem Maße Getriebe mit stufenlos veränderbarer Übersetzung als Teil des Fahrantriebsstrangs auf. Konstruktiv beinhalten solche Getriebe mit stufenlos veränderbarer Übersetzung (gebräuchliche englische Abkürzung auch: "CVT" für continuously variable transmission) unter anderem üblicherweise ein hydrostatisches Getriebe mit zwei hydrostatischen Einheiten, die hydraulisch miteinander verbunden sind, wobei eine der Einheiten als Pumpe und die andere der Einheiten als Motor wirkt. Indem zumindest eine der Einheiten ein veränderbares hydraulisches Schluck- bzw. Fördervolumen aufweist, lässt sich das Drehzahlverhältnis zwischen den Wellen von Pumpe und Motor stufenlos verstellen. In Zusammenwirkung des hydrostatischen Getriebes mit einem leistungsverzweigten mechanischen Getriebe ergibt sich zusammen eine hydromechanische Getriebeanordnung, bei der sich ein Übersetzungsverhältnis zwischen Eingangswelle und Ausgangswelle zumindest bereichsweise stufenlos verändern lässt. Mit einer Veränderung des Übersetzungsverhältnisses ändert sich dabei auch die Aufteilung zwischen mechanisch und hydraulisch übertragener Antriebsleistung. Verschiedene Bauarten solcher Getriebeanordnungen sind bekannt.

In der Praxis zeigt sich, dass wie zuvor beschriebene Getriebeanordnungen, die ein hydrostatisches Getriebe umfassen, zumindest in bestimmten Betriebssituationen eine ausgeprägte Geräuschentwicklung aufweisen, was zumindest als störend empfunden wird. Möglicherweise besteht in diesen Betriebssituation auch ein erhöhter Verschleiß von betroffenen, in Vibrationen versetzten Bauteilen. Abhängig von der Bauart und den Abmessungen der Getriebeanordnung ist eine bloße mechanische Entkopplung des hydrostatischen Getriebes zur Verringerung von Betriebsgeräuschen zumindest in bestimmten Betriebssituationen keine hinreichende Lösungsmaßnahme.

Es ist daher eine Aufgabe der vorliegenden Erfindung, eine Getriebeanordnung der genannten Art anzugeben, die eine verringerte Geräuschentwicklung aufweist.

Die Aufgabe wird gelöst durch eine Getriebeanordnung mit den Merkmalen des Anspruchs 1. Diese zeichnet sich dadurch aus, dass zumindest einer die hydrostatischen Einheiten verbindenden Hydraulikleitung Mittel zur Dämpfung hydraulischer Druckschwingungen zugeordnet sind.

Der erfindungsgemäßen Lösung liegt zunächst die Erkenntnis zugrunde, dass hydrostatische Einheiten betriebsbedingt hydraulische Druckschwingungen verursachen. Bei üblicherweise zum Einsatz kommenden Axialkolbenmaschinen entstehen diese Druckschwingungen durch die Übertragung der mechanischen Kolbenbewegungen in das Druckfluid. Die Druckschwingungen bilden dabei eine Druckwelle aus, deren Wellenlänge abhängig von der Frequenz ist, mit der die Kolben die Druckschwingung einprägen. Es besteht ein direkter Zusammenhang zwischen der Drehzahl einer hydrostatischen Einheit und der Frequenz bzw. Wellenlänge der Druckschwingung.

Von dieser Wirkungsweise ausgehend ist weiter erkannt worden, dass abhängig von den jeweiligen geometrischen Abmessungen der Getriebeanordnung die Möglichkeit besteht, dass die halbe Wellenlänge einer Druckschwingung - oder ein beliebiges Vielfaches davon - genau der (baulichen) Länge einer die hydrostatischen Einheiten verbindenden Hydraulikleitung entspricht. In einem solchen Fall bildet sich in der Hydraulikleitung eine stationäre Druckwelle ("stehende Welle") aus, bei welcher die Laufzeit eines Wellenmaximums genau der Zeit entspricht, innerhalb derer beim Schwingungserreger, d.h. einer hydrostatischen Einheit, das nächste Wellenmaximum erzeugt wird. Diese Erscheinung bewirkt, dass sich Wellenmaxima immer weiter verstärken und sich in der Hydraulikleitung eine immer höhere Druckamplitude aufbaut. Innerhalb eines aus zwei hydrostatischen Einheiten gebildeten hydraulischen Pumpe-Motor-Kreises mit einer Hochdruckseite und einer Niederdruckseite führt dies dazu, dass einerseits auf der Hochdruckseite ein immer größerer Impuls von der Hydraulikleitung auf die tragende mechanische Struktur der Getriebeanordnung übertragen wird, was störende Betriebsgeräusche verursacht. Andererseits besteht auf der Niederdruckseite die Gefahr, dass der dynamische Druck innerhalb der Hydraulikleitung sehr weit abfällt, wobei Kavitation, d.h. die Bildung (und anschließende Auflösung) von dampfgefüllten Hohlräumen (Dampfblasen) innerhalb der Hydraulikflüssigkeit, entstehen kann, die ebenfalls störende Betriebsgeräusche erzeugt.

In Kenntnis der identifizierten Ursache für den innerhalb des hydrostatischen Getriebes entwickelten Lärm ist erfindungsgemäß eine einfache wie effektive Gegenmaßnahme gefunden worden, mit der sich Überhöhungen des Drucks auf der Hochdruckseite und/oder Druckeinbrüche - und damit Kavitation - auf der Niederdruckseite vermeiden oder zumindest deutlich verringern lassen. Demnach sind zumindest einer die hydrostatischen Einheiten verbindenden Hydraulikleitung Mittel zur Dämpfung hydraulischer Druckschwingungen zugeordnet. Es kann sich bei derartigen Mitteln grundsätzlich um verschiedenartige hydraulisch wirksame Einrichtungen handeln, mit denen sich hydraulische Druckschwingungen innerhalb einer Hydraulikleitung dämpfen lassen.

Gemäß der Erfindung ist die Hydraulikleitung mit einem hydraulisch wirksamen Dämpfungselement, insbesondere einem Helmholtz-Resonator, einem Lambda/4-Schlauch oder einem hydraulischen Federspeicher, verbunden. Ein solches Element, das beispielsweise über eine Stichleitung an die die hydrostatischen Einheiten verbindende Hydraulikleitung angekoppelt ist, eignet sich zur Dämpfung innerhalb der Hydraulikleitung ausbreitender hydraulischer Druckschwingungen. Es kann ein solches hydraulisch wirksames Dämpfungselement vorgesehen sein oder es können mehrere, beispielsweise zwei hydraulisch wirksame Dämpfungselemente an eine Hydraulikleitung angekoppelt sein. Die größte Wirksamkeit hydraulisch wirksamer Dämpfungselemente ergibt sich durch eine jeweils möglichst endseitige Ankopplung. Dabei stellt ein Helmholtz-Resonator einen akustischen Resonator dar, der im Wesentlichen durch ein federndes Volumen gebildet wird, das zusammen mit der an die Hydraulikleitung angekoppelten Stichleitung ein schwingungsfähiges akustisches System mit einer (oder mehreren) bestimmten Resonanzfrequenz bildet. Bei geeigneter Ausbildung und Anordnung des Helmholtz-Resonators absorbiert dieser auf effektive Weise bestimmte Schwingungsfrequenzen. Alternativ lässt sich als hydraulisch wirksames Dämpfungselement ein sogenannter Lambda/4-Schlauch verwenden. Dabei ist an eine die hydrostatischen Einheiten verbindenden Hydraulikleitung ein rohrartiges Element (z.B. Schlauch) mit einer Länge angeschlossen, die einem Viertel der zu bedämpfenden Wellenlänge entspricht. Das rohrartige Element ist an dem der Hydraulikleitung abgewandten Ende geschlossen, um dort auftreffende Druckwellen zu reflektieren. Durch die Reflexion nach einem Viertel der Wellenlänge verursacht der Lambda/4-Schlauch einen Phasenversatz der zurücklaufenden Welle von 180°gegenüber der Welle in der Hydraulikleitung, so dass Selbstauslöschung der Welle eintritt.

Alternativ oder ergänzend zu den zuvor aufgeführten hydraulisch wirksamen Dämpfungselementen ist es denkbar, die hydraulischen Schwingungen aktiv zu bedämpfen ("aktiver Dämpfer"). Dazu werden gezielt Korrekturdruckschwankungen (auch bekannt als "Antischall") in die Hydraulikleitung eingespeist, welche sich idealerweise mit den betriebsverursachten hydraulischen Druckschwingungen zu Null aufsummieren. Die Korrekturdruckschwankungen könnten beispielsweise mittels eines Piezoaktors als aktivem Dämpfer erzeugt werden, der über ein kleines Volumen an die Hydraulikleitung gekoppelt ist. Eine so - oder auf vergleichbare Weise - erzielte aktive Dämpfung bietet den Vorteil, dass sich ohne Veränderung konstruktiver Elemente des Hydrauliksystems hydraulische Druckschwingungen mit unterschiedlicher und/oder mit veränderlicher Frequenz dämpfen lassen.

Unabhängig von der Art des gewählten hydraulisch wirksamen Dämpfungselements wird eine besonders wirksame Bedämpfung erzielt, wenn diese in der Nähe eines Schwingungsbauchs der zu bedämpfenden stationären Welle erfolgt. An einer Getriebeanordnung mit wie beschriebenem hydrostatischen Getriebe befindet sich ein Schwingungsbauch (Wellenmaximum) in der Regel in unmittelbarer Nähe einer hydrostatischen Einheit, so dass ein hydraulisch wirksames Dämpfungselement bevorzugt dort wirksam anzuordnen ist.

Die im Zusammenhang der Erfindung verwendeten hydrostatischen Einheiten können grundsätzlich von verschiedener Bauart sein. Bevorzugt handelt es sich bei zumindest einer, vorzugsweise bei beiden der hydrostatischen Einheiten um eine Axialkolbenmaschine mit veränderlichem Förder- bzw. Schluckvolumen. Indem eine, vorzugsweise beide hydrostatischen Einheiten ein veränderliches Förder- bzw. Schluckvolumen aufweisen, lässt sich bei entsprechender hydraulischer Verbindung der hydrostatischen Einheiten durch Volumenänderung einer oder beider Axialkolbenmaschinen eine stufenlos einstellbare Übersetzung zwischen einer als Pumpe und einer als Motor wirkenden hydrostatischen Einheit erzielen. Es sind verschiedene Bauarten von verstellbaren Axialkolbenmaschinen bekannt und im Rahmen der Erfindung einsetzbar.

Beispielsweise ist zumindest eine hydrostatische Einheit in Schrägscheibenbauart mit einer Schrägscheibe ausgeführt, die sich zur Veränderung des Förder- und/oder Schluckvolumens der hydrostatischen Einheit gegenüber deren Gehäuse um eine Achse schwenken lässt. Bei einer hydrostatischen Einheit in Schrägscheibenbauart dreht sich eine Kolbentrommel, d.h. ein mit Zylinderbohrungen versehenes drehbares Kolbengehäuse, gegenüber einem gehäusefesten Steuerboden. Eine Veränderung des Förder- bzw. Schluckvolumens erfolgt durch eine Winkelauslenkung der über dem Gehäuse angebrachten Schrägscheibe (auch: "Schwenkscheibe" genannt). Die Kolben sind kraft- bzw. formschlüssig axial mit der Schrägscheibe verbunden und erzeugen somit bei einer Umdrehung eine volle Hubbewegung. Bei der Schrägscheibenbauart kann das hydraulisch wirksame Dämpfungselement vorteilhaft in das Gehäuse der hydrostatischen Einheit integriert oder an dieses angebaut sein. Da bei dieser Bauart das Gehäuse feststeht und oftmals massiv ausgeführt ist, lassen sich hydraulisch wirksame Dämpfungselemente mit verhältnismäßig geringem Aufwand darin eingießen.

Gemäß einer weiterhin bevorzugten Bauart der Getriebeanordnung ist zumindest eine der hydrostatischen Einheiten als Axialkolbenmaschine in Schrägachsbauart mit einem Schwenkgehäuse ausgeführt, das sich zur Veränderung des Förder- und/oder Schluckvolumens der hydrostatischen Einheit um eine Achse schwenken lässt. Eine Axialkolbenmaschine in Schrägachsbauart umfasst in konstruktiver Hinsicht zweckmäßigerweise jeweils ein mit Zylinderbohrungen versehenes drehbares Kolbengehäuse sowie darin eingesetzte Kolben, die insbesondere über Kugelgelenke mit einer Triebflanschscheibe verbunden sind, wobei eine Drehachse des Kolbengehäuses mit einer Drehachse der Triebflanschscheibe jeweils einen Schwenkwinkel bildet, der sich durch Verschwenken eines das Kolbengehäuse aufnehmenden Schwenkgehäuses um eine Schwenkachse verändern lässt, um das Förder- und/oder Schluckvolumen der hydrostatischen Einheit zu verändern.

Bei der Verwendung von Axialkolbenmaschinen in Schrägachsbauart sieht eine bevorzugte Weiterbildung der Erfindung vor, dass die Hydraulikleitung abschnittsweise durch das Schwenkgehäuse einer hydrostatischen Einheit verläuft und das hydraulisch wirksame Dämpfungselement innerhalb des Schwenkgehäuses mit der Hydraulikleitung verbunden ist. Durch eine Verbindung von Dämpfungselement und Hydraulikleitung innerhalb des Schwenkgehäuses ist sichergestellt, dass die Bedämpfung in unmittelbarer Nähe einer hydrostatischen Einheit erfolgt und damit besonders effektiv ist. Daneben lässt sich mit dieser Maßnahme auf konstruktiv einfache Weise die hydraulische Dichtheit der Ankopplung des hydraulisch wirksamen Elements gewährleisten.

Ganz allgemein, das heißt unabhängig von der Bauart der hydrostatischen Einheiten, ist vorteilhaft vorgesehen, dass das hydraulisch wirksame Dämpfungselement am oder zumindest nahe einem der hydrostatischen Einheit zugewandten Ende der Hydraulikleitung mit dieser verbunden ist. Durch diese Anordnung ergibt sich eine besonders hohe Wirksamkeit der Dämpfung, da Maxima einer stationären Welle üblicherweise an den Enden der zwischen den hydrostatischen Einheiten verlaufenden Hydraulikleitung, insbesondere am Übergang einer Hydraulikleitung zur rotierenden Axialkolbenmaschine entstehen.

Gemäß einer weiter bevorzugten Ausführung der Getriebeanordnung ist das hydraulisch wirksame Dämpfungselement integraler Bestandteil des Schwenkgehäuses, insbesondere indem das Schwenkgehäuse mit integriertem Dämpfungselement als ein Gussteil hergestellt ist. Eine solche Ausführung bietet neben einer einfach erzielten hydraulischen Dichtheit der gesamten Dämpfungsanordnung den Vorteil einer gleich bleibenden Anzahl verbauter Teile. Es entsteht kein zusätzlicher Montageaufwand, und es ergibt sich eine geringe Störanfälligkeit.

Wie bereits erwähnt, sind verschiedene Wirkungsprinzipien zur Schwingungsdämpfung anwendbar. Konstruktiv bevorzugt kommt dabei ein Helmholtz-Resonator zum Einsatz. In diesem Sinne wird vorteilhaft das hydraulisch wirksame Dämpfungselement durch ein mit der Hydraulikleitung verbundenes Hydraulikvolumen gebildet, das von einem Hohlkörper, insbesondere einem Teil des Schwenkgehäuses eingeschlossen wird. Gegenüber einem sonstigen Feder-Masse-Schwinger (hydraulischer Federspeicher) oder einem Lambda/4-Schlauch bietet ein Helmholtz-Resonator den Vorteil, dass sich dieser auf verhältnismäßig einfache Weise, nämlich durch Integration in das Schwenkgehäuse einer hydrostatischen Einheit anordnen lässt. Das Schwenkgehäuse bleibt dabei beweglich, weitestgehend ohne Beeinträchtigungen durch das Dämpfungselement.

Gemäß der Erfindung ist das hydraulisch wirksame Dämpfungselement ausgelegt, Schwingungen zu dämpfen, deren halbe Wellenlänge oder ein Vielfaches davon der Länge der Hydraulikleitung zwischen den beiden hydrostatischen Einheiten entspricht. Handelt es sich um ein passives Dämpfungselement, wie beispielsweise einen Helmholtz-Resonator, so bestimmt sich die Dämpfungscharakteristik insbesondere durch dessen Resonanzfrequenz. Gemäß einer vorteilhaften Weiterbildung der Erfindung könnte der Helmholtz-Resonator so gestaltet sein, dass sich dessen Resonanzfrequenz - zumindest in gewissen Grenzen - einstellen lässt. Hierzu könnte beispielsweise das Volumen des Helmholtz-Resonators durch geeignete Mittel veränderlich gestaltet sein. Eine weitere Einflussmöglichkeit auf die Dämpfungscharakteristik ließe sich weiterhin durch Vorsehen einer Blende bzw. allgemein einer Verengung im Bereich des Resonator-Halses erzielen. Durch eine Blende vergrößert sich insbesondere die Bandbreite des Resonanzeffekts. Somit wird ein größeres Spektrum von Schwingungen gedämpft. Gemäß einer vorteilhaften Ausgestaltung der Getriebeanordnung weist das hydrostatische Getriebe zwei hydrostatische Einheiten auf, die über parallele Hydraulikleitungen zu einem Hydraulikreis mit einer Hochdruckseite und einer Niederdruckseite miteinander verbunden sind. Dabei sind die hydrostatischen Einheiten vorzugsweise so gestaltet, insbesondere nämlich von gleicher Bauart, dass sich das hydrostatische Getriebe mit umkehrbarer hydraulischer Flussrichtung betreiben lässt, wobei die Zuordnung der beiden hydrostatischen Einheiten zwischen Pumpe und Motor umkehrbar ist. Je nach Einsatzweck können die hydrostatischen Einheiten - bei gleicher Bauart - eine unterschiedliche Baugröße aufweisen.

Eine bevorzugte Weiterbildung sieht vor, dass zumindest einer der hydrostatischen Einheiten, vorzugsweise jedoch beiden hydrostatischen Einheiten, ein eigenes Schwenkgehäuse zugeordnet ist, so dass sich deren Förder- und/oder Schluckvolumen einzeln verstellen lässt.

Gemäß einer dazu alternativen Ausführung der Getriebeanordnung sind die hydrostatischen Einheiten einem gemeinsamen Schwenkgehäuse (sogenannte "Doppeljoch-Anordnung") zugeordnet, so dass sich ein Förder- und/oder Schluckvolumen der hydrostatischen Einheiten gemeinsam verstellen lässt.

Bei einer Getriebeanordnung mit einzeln verstellbaren hydrostatischen Einheiten umfasst das hydrostatische Getriebe vorzugsweise eine Lagerbrücke, welche die hydrostatischen Einheiten in vorzugsweise achsparalleler Ausrichtung mit einem Abstand zueinander aufnimmt. Eine solche Ausführung bietet insbesondere für die Verwendung innerhalb einer übergeordneten Getriebeanordnung verschiedene Vorteile. Es ergibt sich bei kompakter Bauform ein fest definierter Abstand zwischen den hydrostatischen Einheiten. Weiterhin lassen sich die die hydrostatischen Einheiten verbindenden Hydraulikleitungen, insbesondere der Hochdruck- und der Niederdruckseite, zumindest bereichsweise als in die Lagerbrücke des hydrostatischen Getriebes eingegossene Leitung ausführen. Eine derartige Leitungsgestaltung erweist sich als besonders wenig störanfällig.

Getriebeanordnungen, die ein wie zuvor beschriebenes hydrostatisches Getriebe umfassen, können grundsätzlich in unterschiedlichen Anwendungen zum Einsatz kommen. Gemäß einer bevorzugten Ausgestaltung weist die im Rahmen dieser Erfindung beschriebene Getriebeanordnung neben dem hydrostatischen Getriebe auch ein leistungsverzweigtes mechanisches Getriebe auf, das mit dem hydrostatischen Getriebe zusammenwirkt, um zusammen eine hydromechanische Getriebeanordnung zu bilden. Eine solche hydromechanische Getriebeanordnung kann beispielsweise an einem landwirtschaftlichen Fahrzeug, insbesondere an einem Traktor als Teil dessen Fahrantriebsstrangs zum Einsatz kommen, um ein Getriebe mit stufenlos veränderlicher Übersetzung bereitzustellen.

Bei einer Ausführung als hydromechanische Getriebeanordnung ist bevorzugt jede der hydrostatischen Einheiten vorzugsweise über ein Kupplungselement, insbesondere über eine Bogenzahnkupplung, mit einer Welle des leistungsverzweigten mechanischen Getriebes antriebsverbunden. Das hydrostatische Getriebe mit den beiden als Pumpe und Motor wirkenden hydrostatischen Einheiten ist somit über das leistungsverzweigte mechanische Getriebe antreibbar und treibt andererseits in vorgebbarem Drehzahlverhältnis (=Übersetzung) einen Zweig des leistungsverzweigten mechanischen Getriebes an.

Eine bevorzugte Ausgestaltung der Erfindung sieht vor, dass sich die hydromechanische Getriebeanordnung von einem ersten Übersetzungsbereich in einen zweiten Übersetzungsbereich bringen lässt, wobei sich der Leistungsfluss des hydrostatischen Getriebes bei einem Wechsel zwischen den Übersetzungsbereichen umkehrt.

Die Erfindung wird nachfolgend anhand eines in der Zeichnung dargestellten bevorzugten Ausführungsbeispiels näher erläutert. In der Zeichnung zeigt:
- Fig. 1: eine hydromechanische Getriebeanordnung in schematischer Darstellung,
- Fig. 2: eine Getriebeanordnung gemäß bevorzugtem Ausführungsbeispiel in perspektivischer Ansicht,
- Fig. 3: eine Lagerbrücke der in Fig. 2 gezeigten Getriebeanordnung,
- Fig. 4a: ein Schwenkgehäuse eines hydrostatischen Getriebes in perspektivischer Ansicht von der Seite,
- Fig. 4b: das in Fig. 4a gezeigte Schwenkgehäuse in perspektivischer Ansicht von vorn,
- Fig. 5: eine perspektivische Ansicht eines wie in den Fig. 4a und 4b dargestellten Schwenkgehäuses mit sichtbar gemachten Hydraulikleitungen.

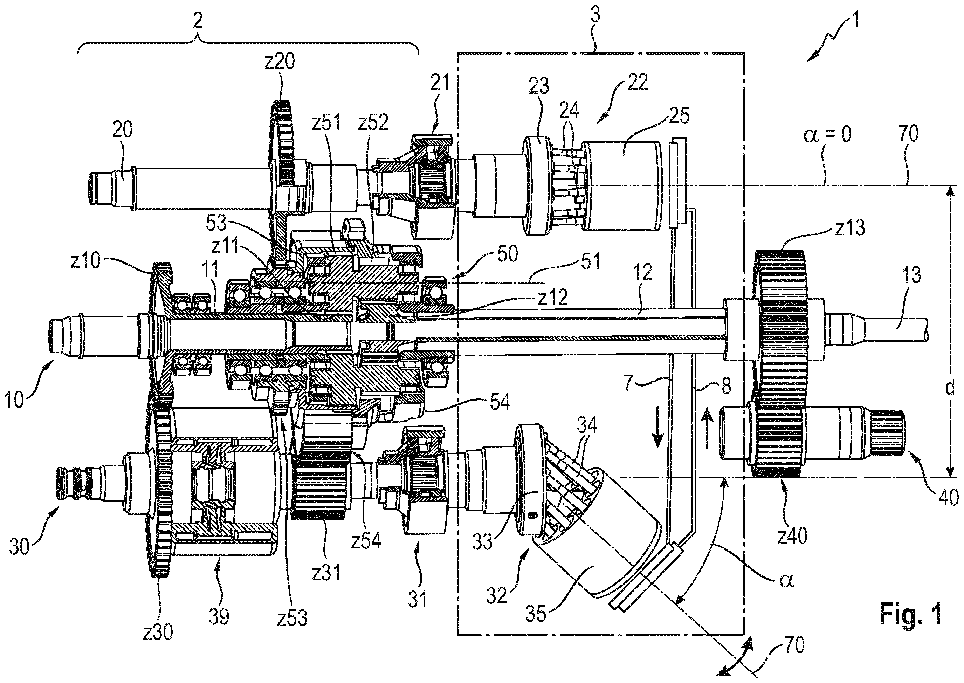

In Fig. 1 ist in schematischer Darstellung eine Getriebeanordnung 1 gezeigt, an welcher die hier beschriebene Erfindung beispielsweise, jedoch nicht ausschließlich zum Einsatz kommen kann. Die Getriebeanordnung 1 umfasst im Wesentlichen ein leistungsverzweigtes mechanisches Getriebe 2 sowie ein damit kombiniertes hydrostatisches Getriebe 3. Insgesamt bilden die beiden miteinander zusammenwirkenden Getriebe 2 und 3 eine hydromechanische Getriebeanordnung 1. Eine solche hydromechanische Getriebeanordnung 1 kommt bevorzugt als Teil eines Fahrantriebsstrangs eines Fahrzeugs, insbesondere eines landwirtschaftlichen Fahrzeugs wie eines Traktors zum Einsatz und ermöglicht dort eine stufenlos einstellbare Übersetzung zwischen einer (von einem nicht dargestellten Antriebsmotor antreibbaren) Eingangswelle 10 und einer (eine Fahrachse des Fahrzeugs mit Antriebsleistung versorgenden) Ausgangswelle 40 der Getriebeanordnung 1. Der Aufbau der Getriebeanordnung 1 sei nachfolgend im Einzelnen beschrieben:
Eine mit einem Antriebsmotor (nicht gezeigt) in Antriebsverbindung stehende Eingangswelle 10 geht zentral in die Getriebeanordnung 1 ein. Dabei liegt die Eingangswelle 10 mit einer aus der Getriebeanordnung 1 ausgehenden Zapfwelle 13 auf einer Achse. Die Eingangswelle 10 und die Zapfwelle 13 sind drehfest miteinander verbunden. Die Drehzahl der Zapfwelle 13 entspricht daher stets der Drehzahl der Eingangswelle 10.

Die Eingangswelle 10 ist Teil des mechanisch leistungsverzweigten Getriebes 2. Zusätzlich zu der Eingangswelle 10 umfasst dieses zwei Zwischenwellen 20, 30, die jeweils mit gleichem Abstand zur Eingangswelle 10 parallel zu dieser verlaufen und mit einem Abstand d voneinander beabstandet sind. Jede der Zwischenwellen 20 bzw. 30 steht jeweils über eine Bogenzahnkupplung 21 bzw. 31 mit dem hydrostatischen Getriebe 3 der Getriebeanordnung 1 in Antriebsverbindung.

Das mechanisch leistungsverzweigte Getriebe 2 ist als Stufenplanetengetriebe konzipiert. Demnach bildet ein zusammengesetztes Planetengetriebe 50 den funktionalen Kern des mechanisch leistungsverzweigten Getriebes 2. Das zusammengesetzte Planetengetriebe 50 ist koaxial zur Eingangswelle 10 angeordnet und umfasst im Wesentlichen einen drehbar gelagerten Planetenträger 54, ein vom Planetenträger 54 unabhängig drehbar gelagertes Hohlrad 53, und eine Mehrzahl von Planetenrädern z51, z52, die über Planetenachsen 51 gegenüber dem Planetenträger 54 gelagert sind.

Der Planetenträger 54 ist drehfest verbunden mit einer Hohlwelle 12, deren Drehachse mit den Drehachsen von Eingangswelle 10 und Zapfwelle 13 zusammenfällt. An der Hohlwelle 12 ist ein Zahnrad z13 angeordnet, das mit einem an der Abtriebswelle 40 angeordneten Zahnrad z40 kämmt. Auf diese Weise steht der Planetenträger 54 über die Hohlwelle 12 sowie die Zahnräder z13 und z40 mit der Ausgangswelle 40 der Getriebeanordnung 1 in stetiger Antriebsverbindung. An dem Planetenträger 54 ist weiterhin ein außenliegender Zahnkranz z54 (Außenverzahnung) ausgebildet, der mit einem an der Zwischenwelle 30 angeordneten Zahnrad z31 kämmt.

Der Planetenträger 54 nimmt in sich eine Mehrzahl von Planetenrädern auf. Dabei handelt es sich um Planetenräder einer ersten Stufe z51 und um Planetenräder einer zweiten Stufe z52. Ein Planetenrad erster Stufe z51 ist jeweils mit einem Planetenrad zweiter Stufe z52 gemeinsam um eine Planetenachse 51 drehbar gegenüber dem Planetenträger 54 gelagert. Das zusammengesetzte Planetengetriebe 50 weist beispielsweise drei Paarungen von Planetenrädern erster und zweiter Stufe z 51, z52 auf. Die Planetenachsen 51 verlaufen mit gleichem Abstand sowie parallel zu den zentralen Achsen 10, 12, 13 und sind gleichmäßig um diese herum angeordnet. Die Planetenräder erster Stufe z51 weisen einen größeren Durchmesser auf als die Planetenräder zweiter Stufe z52.

Die Planetenräder erster Stufe z51 kämmen innenseitig mit einem ersten Sonnenrad z11. Das erste Sonnenrad z11 ist an einer Hohlwelle 11 angeordnet, die um eine mit der Eingangswelle 10 zusammenfallenden Achse drehbar gelagert ist. An der Hohlwelle 11 ist weiterhin ein Zahnrad z10 drehfest angeordnet, das mit einem an der Zwischenwelle 30 angeordneten Zahnrad z30 kämmt.

Die an der Zwischenwelle 30 angeordneten Zahnräder z30 und z 31 lassen sich durch eine Kupplung 39 wahlweise drehfest mit der Zwischenwelle 30 verbinden. Die Funktionsweise der Kupplung 39 ist dabei exklusiv, d.h. entweder steht das Zahnrad z30 oder das Zahnrad z31 mit der Zwischenwelle 30 in Antriebsverbindung.

Das Hohlrad 53 des zusammengesetzten Planetengetriebes 50 ist um die zentralen Achsen 10, 11 drehbar gelagert und erstreckt sich in axialer Richtung teilweise in den Planetenträger 54 hinein. Durch die so gebildete verschachtelte Anordnung von Hohlrad 53 und Planetenträger 54 stehen die Planetenräder erster Stufe z51 außenseitig mit einer am Hohlrad 53 ausgebildeten Innenverzahnung in kämmendem Eingriff. Weiterhin ist mit dem Hohlrad 53 ein Zahnkranz z53 (mit Außenverzahnung) drehfest verbunden. Über diesen Zahnkranz z53 steht das Hohlrad 53 mit einem drehfest an der Zwischenwelle 20 angeordneten Zahnrad z20 in kämmendem Eingriff.

Die Planetenräder zweiter Stufe z52 stehen innenseitig mit einem zweiten Sonnenrad z12 in kämmendem Eingriff. Das zweite Sonnenrad z12 ist drehfest an der Eingangswelle 10 angeordnet.

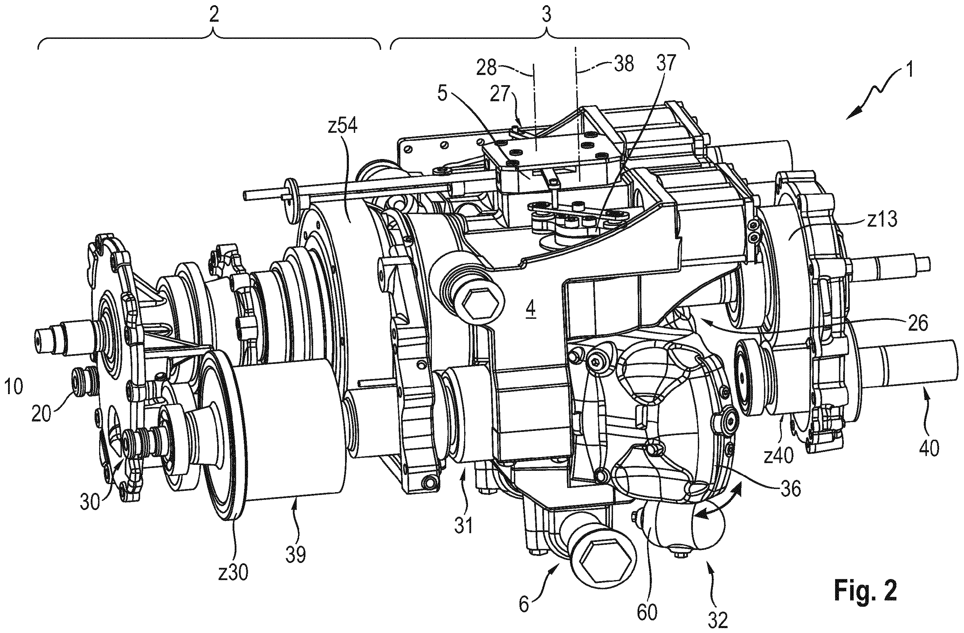

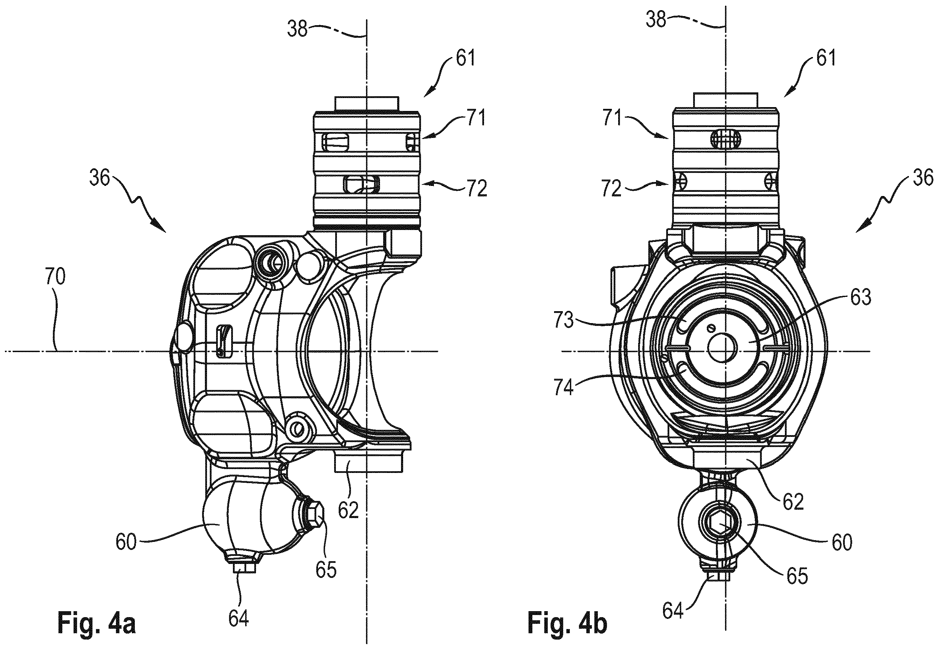

Damit sind Komponenten des mechanisch leistungsverzweigten Getriebes 2 in wesentlichen Aspekten beschrieben. Zum Verständnis der Funktionsweise der gesamten Getriebeanordnung 1 folgt nun die Beschreibung des hydrostatischen Getriebes 3:
Wie bereits ausgeführt, steht jede der Zwischenwellen 20 bzw. 30 jeweils über eine Bogenzahnkupplung 21 bzw. 31 mit einer hydrostatischen Einheit 22, 32 des hydrostatischen Getriebes 3 in Antriebsverbindung. Allgemein ausgedrückt dient das hydrostatische Getriebe 3 zur Übertragung von Antriebsleistung, indem eine als Pumpe wirkende hydrostatische Einheit 22; 32 mit einer als Motor wirkenden hydrostatischen Einheit 32; 22 hydraulisch verbunden ist. Da es sich bei den hydrostatischen Einheiten 22, 32 jeweils um Axialkolbenmaschinen in Schrägachsbauart handelt (d.h. diese umfassen ein Schwenkgehäuse 26 bzw. 36, das sich zur Veränderung des Förder- und/oder Schluckvolumens um eine Achse schwenken lässt), lässt sich mit dem hydrostatischen Getriebe 3 auf einfache Weise - nämlich durch Änderung des Förder- und/oder Schluckvolumens - ein Drehzahlverhältnis stufenlos verstellen, das zwischen den hydrostatischen Einheiten 22, 32 und damit zwischen den damit verbundenen Zwischenwellen 20, 30 besteht. Indem die hydrostatischen Einheiten 22, 32 einen im Wesentlichen identischen (gemeint: bauartgleichen) Aufbau haben, lässt sich das hydrostatische Getriebe 3 dabei in umkehrbarer Richtung betreiben, d.h. die Zuordnung der hydrostatischen Einheiten 22, 32 jeweils zu Pumpe und Motor ist umkehrbar. Der Aufbau des hydrostatischen Getriebes 3 sei nachfolgend weiter erläutert:
Jede der beiden hydrostatischen Einheiten 22, 32 ist auf für sich gesehen zunächst bekannte Weise als Axialkolbenmaschine in Schrägachsbauart ausgeführt und umfasst ein mit Zylinderbohrungen versehenes drehbares Kolbengehäuse 25, 35 sowie darin eingesetzte Kolben 24, 34, die jeweils über ein Kugelgelenk mit einer radförmigen Triebflanschscheibe 23, 33 verbunden sind. Wie in Fig. 1 zu sehen, bildet dabei eine Drehachse 70 des Kolbengehäuses 25, 35 mit einer Drehachse (zusammenfallend mit Zwischenwellen 20, 30) der Triebflanschscheibe 23, 33 jeweils einen Schwenkwinkel a, der sich durch Verschwenken eines das Kolbengehäuse 25, 35 aufnehmenden Schwenkgehäuses (Bezugszeichen 26, 36, aus Darstellungsgründen erst zu sehen in Fig. 2, 4a, 4b) verändern lässt, um so das Förder- und/oder Schluckvolumen der hydrostatischen Einheiten 22, 32 zu verändern.

Die hydrostatische Einheit 22 ist der Zwischenwelle 20 zugeordnet und über die Bogenzahlkupplung 21 mit dieser antriebsverbunden. Die hydrostatische Einheit 32 ist der Zwischenwelle 30 zugeordnet und über die Bogenzahnkupplung 31 mit dieser antriebsverbunden. Die beiden hydrostatischen Einheiten 22, 23 sind über - hier zunächst vereinfacht dargestellte - Hydraulikleitungen 7, 8 hydraulisch miteinander verbunden. Auf diese Weise wird jeweils von der als Pumpe wirkenden hydrostatischen Einheit 22; 32 Antriebsleistung auf die als Motor wirkende hydrostatische Einheit 32; 22 übertragen. In Bezug auf die Zwischenwellen 20, 30 wirkt diese hydraulische Kopplung über Pumpe und Motor wie ein Getriebe, das eine Drehzahlkopplung zwischen den Zwischenwellen 20, 30 herstellt. Abhängig vom Betriebszustand (Zuordnung der hydrostatischen Einheiten 22, 32 zu Pumpe oder Motor) herrscht dabei entweder in der Hydraulikleitung 7 Niederdruck und in der Hydraulikleitung 8 Hochdruck, oder herrscht in der Hydraulikleitung 8 Niederdruck und in der Hydraulikleitung 7 Hochdruck. Durch die jeweilige Möglichkeit der Veränderung des Schwenkwinkels a an jeder der beiden hydrostatischen Einheiten 22, 32 lässt sich ein zwischen den Zwischenwellen 20, 30 bestehendes Übersetzungsverhältnis stufenlos verstellen.

Die in Fig. 1 gezeigte hydromechanische Getriebeanordnung 1, umfassend das mechanisch leistungsverzweigte Getriebe 2 und das damit gekoppelte hydrostatische Getriebe 3, lässt sich in zwei unterschiedliche Betriebszustände bringen, die zu unterschiedlichen erzielbaren Übersetzungsbereichen zwischen Eingangswelle 10 und Ausgangswelle 40 führen. Zum Wechsel zwischen einem ersten Übersetzungsbereich und einem zweiten Übersetzungsbereich dient die Kupplung 39, welche wahlweise entweder das Zahnrad z31 (erster Übersetzungsbereich) oder das Zahnrad z30 (zweiter Übersetzungsbereich) mit der Welle 30 in Antriebsverbindung bringt. Der Leistungsfluss durch die Getriebeanordnung 1 in jedem der Übersetzungsbereiche sei nachfolgend kurz wiedergegeben:
Erster Übersetzungsbereich ("Fahrbereich 1"):
   Die Eingangswelle 10 treibt über das zweite Sonnenrad z12 die Planetenräder z52 des zusammengesetzten Planetengetriebes 50 an. Die Antriebsleistung teilt sich nun in zwei Teile auf ("Power split"):
   Ein erster Teil der Antriebsleistung wird über die mitangetriebenen Planetenräder z51 auf das Hohlrad 53 und von dort über das Zahnrad z20 und die Zwischenwelle 20 an die hydrostatische Einheit 22 übertragen. Diese wirkt nun als Pumpe und treibt die als Motor wirkende hydrostatische Einheit 32 an. Die davon angetriebene Zwischenwelle 30 steht über das in diesem Fall mit der Zwischenwelle 30 drehfest verbundene Zahnrad z31 mit dem Planetenträger 54 in Antriebsverbindung.
   Ein zweiter Teil der Antriebsleistung wird über die Planetenachsen 51 der Planetenräder z52 auf den Planetenträger 54 übertragen.
   Am Planetenträger 54 vereinigt sich die Antriebsleistung des ersten und zweiten Teils wieder ("Power joint"), um über die Hohlwelle 12, das Zahnrad z13, das Zahnrad z40 und die Ausgangswelle 40 aus der Getriebeanordnung 1 auszugehen. Abhängig von den gewählten Schwenkwinkeln a der hydrostatischen Einheiten 22, 32 lässt sich innerhalb des ersten Übersetzungsbereichs (bei einer als konstant angenommen Eingangsdrehzahl der Eingangswelle 10) die Ausgangsdrehzahl der Welle 40 stufenlos von null bis zu einer Übergangsdrehzahl verändern.
Zweiter Übersetzungsbereich ("Fahrbereich 2"):
   Wieder treibt die Eingangswelle 10 über das zweite Sonnenrad z12 die Planetenräder z52 des zusammengesetzten Planetengetriebes 50 an. Nun ist jedoch die Kupplung 39 so geschaltet ist, dass nicht mehr das Zahnrad z31, sondern stattdessen das Zahnrad z30 mit der Welle 30 drehfest verbunden ist.
   Aufgrund des veränderten Schaltzustands wird nun ein Teil der Antriebsleistung über die mitangetriebenen Planetenräder z51 auf das erste Sonnenrad z11 übertragen, um von dort über die Hohlwelle 11, das Zahnrad z10 und das damit kämmende Zahnrad z30 auf die in diesem Fall mit dem Zahnrad z30 drehfest verbundene Zwischenwelle 30 übertragen zu werden. Die Zwischenwelle 30 treibt nun die hydrostatische Einheit 32 an, die - in Umkehr ihrer Funktion - nun als Pumpe wirkt, um die - ebenfalls in Umkehr ihrer Funktion - als Motor wirkende hydrostatische Einheit 22 anzutreiben. Die von der hydrostatischen Einheit 22 angetriebene Zwischenwelle 20 treibt über das Zahnrad z20 und den damit kämmenden Zahnkranz z53 das Hohlrad 53 an, das wiederum innenseitig mit den Planetenrädern z51 kämmt.
   Abhängig von den gewählten Schwenkwinkeln a der hydrostatischen Einheiten 32, 22 lässt sich innerhalb des zweiten Übersetzungsbereichs (bei einer als konstant angenommen Eingangsdrehzahl der Eingangswelle 10) die Ausgangsdrehzahl der Welle 40 stufenlos von der Übergangsdrehzahl bis zu einer Maximaldrehzahl verändern.

Mit der gezeigten hydromechanischen Getriebeanordnung 1 lässt sich somit im Rahmen von zwei Übersetzungsbereichen, die durch Betätigen der Kupplung 39 gewählt werden, eine Ausgangsdrehzahl der Welle 40 stufenlos von null auf die Maximaldrehzahl verändern. Dabei kehrt sich mit einem Wechsel zwischen den Übersetzungsbereichen der Leistungsfluss innerhalb des hydrostatischen Getriebes 3 um. Dabei beinhaltet die Umkehr des Leistungsflusses sowohl einen Wechsel der funktionalen Zuordnung der hydrostatischen Einheiten 22, 32 zwischen Pumpe und Motor als auch eine Umkehr der Strömungsrichtung des Hydraulikmediums.

Eine bevorzugte konstruktive Ausgestaltung einer wie anhand von Fig. 1 erläuterten Getriebeanordnung 1 ist in Fig. 2 in einer perspektivischen Ansicht gezeigt. Darin entsprechen mit gleichem Bezugszeichen versehene Maschinenelemente in deren Funktionsweise den im Zusammenhang mit Fig. 1 erläuterten Maschinenelementen und werden daher nicht erneut erläutert.

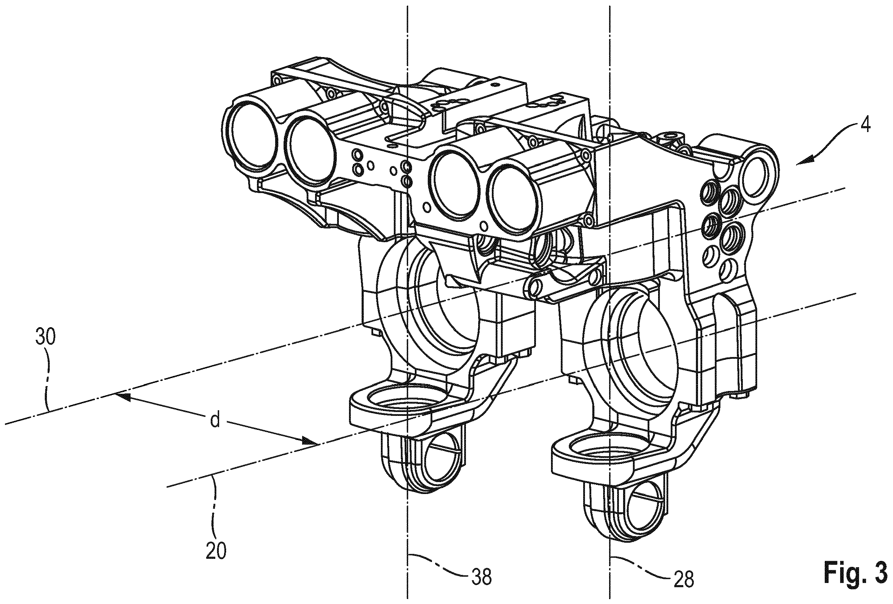

Ergänzend geht aus Fig. 2 insbesondere hervor, dass das hydrostatische Getriebe 3 eine Lagerbrücke 4 umfasst. Die Lagerbrücke 4 ist aus einem Gussteil gefertigt, das in Fig. 3 in perspektivischer Einzeldarstellung abgebildet ist. Dort ist zu sehen, dass die Lagerbrücke 4 zwei mit einem Abstand d voneinander beabstandete Aufnahmen für jeweils eine hydrostatische Einheit 22, 32 aufweist. Folglich nimmt die Lagerbrücke 4 die beiden hydrostatischen Einheiten in achsparalleler Ausrichtung mit einem Abstand d zueinander auf, wobei gemäß der Darstellung von Fig. 2 insbesondere die mit der Welle 30 antriebsverbundene hydrostatische Einheit 32 mit deren Schwenkgehäuse 36 und einem daran ausgebildeten Helmholtz-Resonator 60 zu sehen ist. Hingegen ist die mit der Welle 20 antriebsverbundene hydrostatische Einheit 22 weitestgehend (nur ein Teil deren Schwenkgehäuses 26 ist zu sehen) von der Lagerbrücke 4 verdeckt.

Wie in Fig. 2 angedeutet, lässt sich das Schwenkgehäuse 36 der hydrostatischen Einheit 32, welches das Kolbengehäuse 35 der hydrostatischen Einheit 32 um eine Drehachse 70 drehbar aufnimmt, um eine Stellachse 38 schwenken. Entsprechend der schematischen Darstellung der Fig. 1 lässt sich auf diese Weise der Schwenkwinkel a und somit das Schluck- bzw. Fördervolumen der hydrostatischen Einheit 32 verändern. Ebenso lässt sich ein Schwenkgehäuse 26 der (hier nicht vollständig sichtbaren) hydrostatischen Einheit 22 um eine Stellachse 28 schwenken, um damit den Schwenkwinkel a und somit das Schluck- bzw. Fördervolumen der hydrostatischen Einheit 22 verändern zu können. Eine Veränderung des Schwenkwinkels a erfolgt bei der hydrostatischen Einheit 32 über eine hydraulisch - mittels hier nicht näher bezeichneter Stellkolben - betätigbare Schwenklasche 37 bzw. bei der hydrostatischen Einheit 22 über eine hydraulisch betätigbare Schwenklasche 27. Eine mechanisch jeweils mit den Schwenklaschen 37 bzw. 27 gekoppelte Sensoranordnung 5 erfasst den jeweiligen Schwenkwinkel a der hydrostatischen Einheit 22 bzw. 32.

In der Praxis zeigt sich, dass Getriebeanordnungen, die ein hydrostatisches Getriebe umfassen, zumindest in bestimmten Betriebssituationen, insbesondere bei bestimmten Drehzahlen, eine Geräuschentwicklung aufweisen, die als störend empfunden werden kann. Zur Vermeidung einer solchen Geräuschentwicklung sind bei der erfindungsgemäßen Getriebeanordnung 1 den die hydrostatischen Einheiten 22, 32 verbindenden Hydraulikleitungen Mittel zur Dämpfung hydraulischer Druckschwingungen zugeordnet. Die Art und Funktionsweise solcher Mittel sei nachfolgend näher erläutert:
Zur Erfüllung der angestrebten Funktionsweise des hydrostatischen Getriebes 3 sind die hydrostatischen Einheiten 22, 32 - wie in Fig. 1 mit den dortigen Bezugszeichen 7, 8 schematisch dargestellt - über Hydraulikleitungen zu einem Hydraulikkreis miteinander verbunden. Diese Hydraulikleitungen verlaufen bereichsweise durch die Schwenkgehäuse 26, 36 der beiden hydrostatischen Einheiten 22, 32 sowie bereichsweise (in einem zwischen Drehdurchführungen 61 der hydrostatischen Einheiten 22, 32 liegenden Abschnitt) durch die Lagerbrücke 4 hindurch und sind dazu in diese Bauteile eingegossen. Die Länge des durch die Lagerbrücke 4 verlaufenden Leitungsabschnitts ist vor allem bestimmt durch den Abstand d, mit welchem die hydrostatischen Einheiten 22, 32 voneinander beabstandet sind.

Die Fig. 4a und 4b zeigen nun in perspektivischer Ansicht von der Seite bzw. von vorn das Schwenkgehäuse 36 in Einzelansicht. Es sei angemerkt, dass ein dem Schwenkgehäuse 36 im Prinzip baugleiches Schwenkgehäuse auch an der hydrostatischen Einheit 22 zum Einsatz kommt. Zur Vermeidung von Wiederholungen sei nachfolgend das Schwenkgehäuse 36 stellvertretend auch für das Schwenkgehäuse 26 der hydrostatischen Einheit 22 beschrieben.

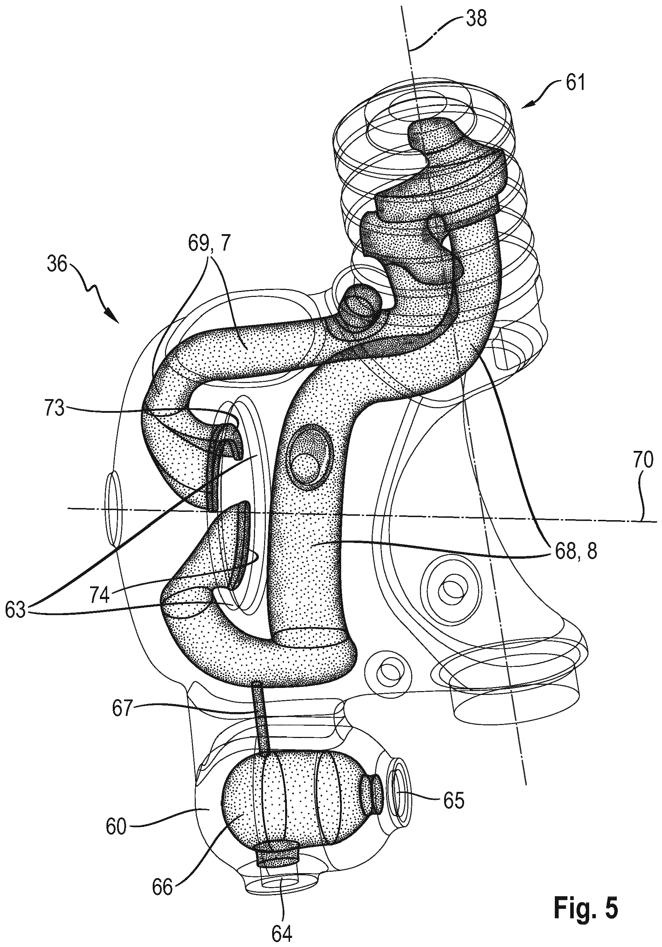

An die in Fig. 3 gezeigte Lagerbrücke 4 lässt sich im Bereich der Stellachse 38 das Schwenkgehäuse 36 montieren, das zur Veränderung des Förder- und/oder Schluckvolumens der hydrostatischen Einheit 32 um die Stellachse 38 schwenkbar ist. Das Schwenkgehäuse 36 ist als Gussteil gefertigt, das - wie in Fig. 4a und 4b zu sehen - in einem zentralen Bereich es eine etwa zylindrische Ausnehmung aufweist, welche die Drehachse 70 eines in die Ausnehmung einsetzbaren Kolbengehäuses 35 (in den Fig. 4a, 4b aus Darstellungszwecken weggelassen) vorgibt. Wie 4b zeigt, wird die Ausnehmung innenseitig von einer kreisrunden Formplatte 63 begrenzt. An dieser Formplatte 63 sind zwei sich bezogen auf die Drehachse 70 gegenüberliegende nierenförmige Ausnehmungen 73, 74 ausgebildet. Mit Bezug auf Fig. 5, welche das Schwenkgehäuse 36 in einer perspektivischen Ansicht zeigt, bei welcher die durch das Schwenkgehäuse 36 verlaufenden hydraulischen Leitungen sichtbar sind, wird deutlich, dass die in Fig. 4b gezeigten nierenförmigen Ausnehmungen 73, 74 der Formplatte 63 Teil der hydraulischen Versorgung der Axialkolbenmaschine (Kolbengehäuse 35) sind. Dies sei an späterer Stelle weiter erläutert.

Damit sich das Schwenkgehäuse 36 wie erforderlich schwenken lässt, sind am Schwenkgehäuse 36 eine Drehdurchführung 61 mit zylindrischer Grundform sowie ein zylindrischer Drehzapfen 62 ausgebildet, welche die Stellachse 38 des Schwenkgehäuses 36 vorgeben. Indem das Schwenkgehäuse 36 mittels des Drehzapfens 62 und der Drehdurchführung 61 gegenüber der in Fig. 3 dargestellten Lagerbrücke 4 gelagert wird, lässt sich das Schwenkgehäuse 36 gegenüber der Lagerbrücke 4 um die Stellachse 38 schwenken.

Bei dem Drehzapfen 62 handelt es sich um ein rein mechanisch wirkendes Element (Drehlagerzapfen). Hingegen hat die Drehdurchführung 61 neben der mechanischen Funktion als Drehlagerzapfen weiterhin die Funktion, die hydraulische Versorgung am Übergang zwischen Lagerbrücke 4 und dem (dieser gegenüber beweglichen) Schwenkgehäuse 36 zu gewährleisten. Dazu weist die Drehdurchführung 61 zwei axial voneinander beabstandete Umfangsbereiche 71, 72 auf. An jedem dieser Umfangsbereiche 71, 72 sind Öffnungen in Form von sich in Umfangsrichtung erstreckenden Langlöchern ausgebildet. In der Lagerbrücke 4 sind in einem die Drehdurchführungen 61 des Schwenkgehäuses 36 aufnehmenden Bereich zwei entsprechend axial voneinander beabstandete ringförmige Ausnehmungen ausgebildet, so dass in Zusammenwirkung zwei hydraulische Verbindungen zwischen Schwenkgehäuse 36 und Lagerbrücke 4 gebildet werden, von denen die eine Teil der hydraulischen Leitung 7 und die weitere Teil der hydraulischen Leitung 8 (vgl. Fig. 1) ist.

Zur näheren Erläuterung der Leitungsführung innerhalb des Schwenkgehäuses 36 sei nun auf Fig. 5 verwiesen, welche das Schwenkgehäuse 36 in einer perspektivischen Ansicht zeigt, bei welcher die durch das Schwenkgehäuse 36 verlaufenden, darin eingegossenen, hydraulischen Leitungen sichtbar sind. Demnach sind die Langlöcher des oberen Umfangsbereichs 71 der Drehdurchführung 61 einer langen Versorgungsleitung 68 zugeordnet. Diese lange Versorgungsleitung 68 stellt eine hydraulische Verbindung her zwischen Drehdurchführung 61 und der unteren nierenförmigen Ausnehmung 74 der Formplatte 63. Mit Bezug auf die schematische Darstellung der Fig. 1 ist die lange Versorgungsleitung 68 damit Teil der hydraulischen Leitung 8, welche die hydrostatische Einheit 22 mit der hydrostatischen Einheit 32 verbindet. Dazu im Unterschied sind Langlöcher des unteren Umfangsbereichs 72 der Drehdurchführung 61 einer kurzen Versorgungsleitung 69 zugeordnet. Diese kurze Versorgungsleitung 69 stellt eine hydraulische Verbindung her zwischen Drehdurchführung 61 und der oberen nierenförmigen Ausnehmung 73 der Formplatte 63. Mit Bezug auf die schematische Darstellung der Fig. 1 ist die kurze Versorgungsleitung 69 damit Teil der hydraulischen Leitung 7, welche die hydrostatische Einheit 22 mit der hydrostatischen Einheit 32 verbindet.

Bei einer wie vorliegend achsparallelen Anordnung hydrostatischer Einheiten 22, 32 in Schrägachsbauart besteht in der Praxis aufgrund der Abmessungen der Einheiten 22, 32 und der Schwenkbarkeit der zugehörigen Schwenkgehäuse ein bestimmter Abstand d zwischen den hydrostatischen Einheiten 22, 32. Für Anwendungen beispielsweise an landwirtschaftlichen Traktoren ist dieser Abstand d grundsätzlich ähnlich groß. Die Länge der hydraulischen Leitungen 7, 8, die von einer hydrostatischen Einheit 22 zur anderen 32 verlaufen, ist - neben der Größe und konstruktiven Ausführung der Schwenkgehäuse 26, 36 - wesentlich bestimmt durch diesen Abstand d der hydrostatischen Einheiten 22, 32 zueinander.

Zur Vermeidung von Betriebsgeräuschen, die sich im Betrieb des hydrostatischen Getriebes 3 der erläuterten Getriebeanordnung 1 zumindest in bestimmten Betriebssituationen ergeben können, sind den beiden die hydrostatischen Einheiten 22, 32 verbindenden Hydraulikleitungen 7, 8 Mittel zur Dämpfung hydraulischer Druckschwingungen zugeordnet.

Zu einer bevorzugten Gestaltung dieser Mittel sei zunächst auf Fig. 5 verwiesen. Demnach ist die lange Versorgungsleitung 68, die im Fall des Schwenkgehäuses 36 Teil der Hydraulikleitung 8 (bzw. im Fall des baugleichen Schwenkgehäuses 26 Teil der Hydraulikleitung 7) ist, mit einem als sogenannter Helmholtz-Resonator 60 ausgeführten hydraulisch wirkenden Dämpfungselement verbunden. Dieser Helmholtz-Resonator 60 ist integraler Bestandteil des Schwenkgehäuses 36, nämlich gusstechnisch einteilig mit diesem ausgeführt. Im Wesentlichen umfasst der Helmholtz-Resonator 60 ein Hydraulikvolumen 66, das von einem unterhalb der langen Versorgungsleitung 68 ausgebildeten Hohlkörperbereich des Schwenkgehäuses 36 eingeschlossen wird. Eine untere Zugangsöffnung 64 sowie eine seitliche Zugangsöffnung 65, die im Montagezustand jeweils durch (nicht dargestellte) Verschlussschrauben geschlossen sind, gewährleisten einen die Fertigung des Helmholtz-Resonators 60 vereinfachenden Zugang. Das Hydraulikvolumen 66 weist eine zusammengesetzt bereichsweise zylindrische, bereichsweise halbkugelförmige Formgebung auf. Gleichermaßen denkbar ist eine Kugel- oder Zylinderform und/oder eine Ei-Form, da auch Hydraulikvolumina dieser Formgebung als Masse-Feder-System eine ausgeprägte Eigenfrequenz aufweisen. Neben den zuvor genannten Formen sind auch Abwandlungen dieser Formen oder andere Formen möglich, um eine Schwingungsdämpfung zu erzielen.

Das Hydraulikvolumen 66 ist - bezogen auf die gesamte Länge der Hydraulikleitung 8 - verhältnismäßig nahe an einem der hydrostatischen Einheit 32 zugewandten Ende (gebildet durch die an der Formplatte 63 ausgebildete untere nierenförmige Ausnehmung 74, welche den Übergang zum Kolbengehäuse 35 der hydrostatischen Einheit 32 bildet) der Hydraulikleitung 8 angeordnet und mit dieser innerhalb des Schwenkgehäuses 36 über eine Stichleitung 67 hydraulisch wirksam verbunden.

Das über die Stichleitung 67 an die Hydraulikleitung 8 gekoppelte Hydraulikvolumen 66 dient der Dämpfung hydraulischer Druckschwingungen, die sich während des Betriebs des hydrostatischen Getriebes 3 innerhalb der Hydraulikleitung 8 ausbreiten. Dabei stellt der Helmholtz-Resonator 60 einen akustischen Resonator dar, bei dem das unter bestimmten Betriebsbedingungen (insbesondere bestimmten Betriebsdrehzahlen der Axialkolbenmaschinen) als federnd anzusehende Hydraulikvolumen 66 einschließlich der Stichleitung 67 ein schwingungsfähiges akustisches System mit einer bestimmten (oder mehreren) Resonanzfrequenz bildet. Der so gebildete Helmholtz-Resonator ist derart gestaltet und angeordnet, dass dieser geeignet ist, dieser Resonanzfrequenz entsprechende im Betrieb des hydrostatischen Getriebes 3 auftretende hydraulische Schwingungen zu absorbieren. Denn es zeigt sich, dass bei Getriebeanordnungen, die ein hydrostatisches Getriebe 3 der genannten oder vergleichbarer Art aufweisen, die Axialkolbenmaschinen prinzipbedingt hydraulische Druckschwingungen verursachen. Es handelt sich hierbei um Druckpulsationen, d.h. Druckschwankungen, die durch die periodischen Kolbenhübe und die damit bewirkte periodische Komprimierung bzw. Expansion der hydraulischen Flüssigkeit (in der Regel Hydrauliköl) im Moment der Verbindung mit der jeweiligen Hochdruck- oder Niederdruckseite entstehen und die sich in Form von Druckwellen innerhalb des in den Hydraulikleitungen befindlichen Hydrauliköls ausbreiten.

Getriebeanordnungen mit einem hydrostatischen Getriebe werden üblicherweise - denn dies ist zumeist der Zweck eines hydrostatischen Getriebes - mit veränderlicher Drehzahl betrieben. Die Drehzahlen der hydrostatischen Einheiten durchlaufen demnach stufenlos weite Bereiche. Entsprechend weisen die dabei betriebsbedingt entstehenden hydraulischen Druckwellen veränderliche Frequenzen (f) und folglich Wellenlängen (λ) auf. Gemäß dem allgemeinen Zusammenhang, wonach die Wellenlänge (λ) dem Quotienten aus Ausbreitungsgeschwindigkeit (hier im Medium Öl) geteilt durch Frequenz (f) entspricht, besteht zwischen Frequenz (f) und Wellenlänge (λ) ein umgekehrt proportionaler Zusammenhang, d.h. mit zunehmender Frequenz (f) nimmt die Wellenlänge (λ) ab und umgekehrt. Kurzum bilden die in den hydrostatischen Einheiten erzeugten Druckpulsationen hydraulische Druckwellen aus, deren Wellenlänge von der Frequenz abhängig ist, mit der die Kolben der hydrostatischen Einheit die Pulsation einprägen. Es besteht damit ein direkter Zusammenhang zwischen der Drehzahl einer hydrostatischen Einheit und der Wellenlänge der erzeugten hydraulischen Druckschwingungen.

An einer Getriebeanordnung 1 der zuvor beschriebenen Art lässt sich Folgendes beobachten: Wenn die halbe Wellenlänge λ/2 - oder ein Vielfaches davon - der von einer der hydrostatischen Einheiten 22, 32 erzeugten hydraulischen Druckschwingungen der baulichen Länge einer Hydraulikleitung zwischen dieser hydrostatischen Einheit 22; 32 und der anderen damit verbundenen hydrostatischen Einheit 32; 22 entspricht, bildet sich innerhalb der betroffenen Hydraulikleitung eine stationäre Druckwelle ("stehende Welle") aus, bei der sich die Druckamplitude immer weiter verstärkt. Auf der Hochdruckseite eines hydraulischen Kreises (konkret der Hydraulikleitung, die von der Pumpe zum Motor fördert), führt eine solche Verstärkung dazu, dass ein immer größerer Impuls von der Hydraulikleitung auf die mechanische Struktur der Leitung, also beispielsweise das Schwenkgehäuse 36 und die Lagerbrücke 4 übertragen wird, was Vibrationen und folglich Lärm verursacht. Daneben besteht auf der Niederdruckseite des hydraulischen Kreises (konkret der Hydraulikleitung, die vom Motor zurück zur Pumpe fördert) das Risiko, dass der dynamische Druck sehr weit abfällt. In diesem Fall kann innerhalb des hydraulischen Mediums sogar Kavitation (d.h. eine durch den Druckabfall verursachte Dampfbildung) entstehen, was ebenfalls Lärm verursacht.

Zur Vermeidung dieser Störeffekte ist der an der Getriebeanordnung 1 vorgesehene Helmholtz-Resonator so ausgebildet, dass dieser genau solche hydraulischen Schwingungen dämpft, deren halbe Wellenlänge λ/2 oder ein Vielfaches davon der Länge der Hydraulikleitung 7, 8 zwischen den beiden hydrostatischen Einheiten 22, 32 entspricht.

Die Maxima der stationären Welle entstehen physikalisch bedingt jeweils am Ende einer hydraulischen Leitung, konkret also beispielsweise am Übergang der Leitung 7 zur Axialkolbenmaschine 32, d.h. im Bereich der an der Formplatte 63 des Schwenkgehäuses 36 ausgebildeten nierenförmigen Ausnehmung 74. Zur effektiven Dämpfung befindet sich die Ankopplung des Helmholtz-Resonators 60 an die Hydraulikleitung 8 daher bevorzugt so nahe wie baulich möglich an der nierenförmigen Ausnehmung 74. Bei dem in Fig. 5 gezeigten Ausführungsbeispiele erfolgt die Ankopplung über die Stichleitung 67, welche nahe an einem Ende der Hydraulikleitung 8 (Nähe zur Formplatte 63) in diese mündet. Ohne eine nahe Anordnung wäre die Wirksamkeit des hydraulisch wirksamen Dämpfungselements 60 nicht oder nur eingeschränkt gewährleistet.

Alternativ zu einem wie gezeigten Helmholtz-Resonator könnten auch andere hydraulisch wirksame Dämpfungselemente zum Einsatz kommen, wie beispielsweise ein Lambda/4 Schlauch oder ein hydraulischer Federspeicher.

Bei einem wie bevorzugt beschriebenen Helmholtz-Resonator 60 bestimmt sich die Resonanzfrequenz aus verschiedenen Größen wie der Ausbreitungsgeschwindigkeit (Schallgeschwindigkeit) innerhalb des Hydrauliköls, dem Resonatorvolumen, dem Bohrungsquerschnitt und der Bohrungslänge des als Resonatorhals dienenden Stichkanals 67. Unter anderem ist also die Länge des Stichkanals 67 von der zu bedämpfenden Stelle in der Hydraulikleitung 8 bis zum Hydraulikvolumen 66 von großer Bedeutung. Die in Fig. 5 gezeigte Ausführung des Helmholtz-Resonators 60 bietet den Vorteil, dass die Hydraulikleitung noch innerhalb des Gusskörpers des Schwenkgehäuses 36 mit dem Helmholtz-Resonator 60 verbunden ist. Zugleich ist durch die Anordnung des Helmholtz-Resonators 60 unterhalb der langen Versorgungsleitung 68 gewährleistet, dass das Schwenkgehäuse 36 seine bezogen auf die Stellachse 38 bestehende Einbautiefe nicht vergrößert. Die Schwenkbarkeit ist somit nicht beeinträchtigt.

Der in Fig. 5 gezeigte Helmholtz-Resonator 60 weist zunächst eine bestimmte Dämpfungscharakteristik auf. Es bestehen jedoch grundsätzlich verschiedene Möglichkeiten, diese Dämpfungscharakteristik zu beeinflussen. Zum einen kann die Resonanzfrequenz einstellbar gestaltet sein. Hierzu könnte beispielsweise das Hydraulikvolumen 66 in seiner Größe veränderlich sein, indem beispielsweise eine die Zugangsöffnungen 64 bzw. 65 verschließende Verschlussschraube verschieden tief eingeschraubt wird, um so das Hydraulikvolumen 66 in seiner Größe zu verändern. Daneben könnte der das Hydraulikvolumen 66 einschließende Hohlkörper mehrteilig und im Bereich des zylindrischen Abschnitts teleskopierbar ausgeführt sein. Neben der Resonanzfrequenz könnte die Dämpfung einstellbar gestaltet sein. Hierzu könnte beispielsweise im Bereich des als Resonatorhals wirkenden Stichkanals 67 eine Blende, d.h. eine Verengung, vorgesehen sein, um die Bandbreite von Resonanzerscheinungen zu vergrößern. Eine Blende ließe sich durch verschiedene Maßnahmen schaffen, beispielsweise durch eine so gestaltete Stufenbohrung, dass der Stichkanal 67 an seinem der langen Versorgungsleitung 68 zugewandten Ende eine Verengung aufweist. Alternativ könnte an der dem Hydraulikvolumen 66 zugewandten Mündung Stichkanals 67 eine in den Stichkanal 67 eingeschraubte Blende vorgesehen sein. Abhängig von der Bauform der eingesetzten hydrostatischen Einheit sind weitere Gestaltungen denkbar.

Abschließend sei darauf hingewiesen, dass die anhand des Ausführungsbeispiels gezeigte konstruktive Ausgestaltung der Getriebeanordnung nur als beispielhaft anzusehen ist. Die Erfindung kann auch an anderen Getriebeanordnungen zum Einsatz kommen, insbesondere auch an Getriebeanordnungen, die ausschließlich ein hydrostatisches Getriebe umfassen oder an Getriebeanordnungen, die ein anders gestaltetes mechanisch leistungsverzweigtes Getriebe umfassen.

### Bezugszeichenliste

- 1: hydromechanisches Getriebe
- 2: leistungsverzweigtes Getriebe
- 3: hydrostatisches Getriebe
- 4: Lagerbrücke
- 5: Sensor
- 6: Befestigung
- 7: hydraulische Leitung
- 8: hydraulische Leitung

- 10: Eingangswelle
- 11: Hohlwelle
- 12: Hohlwelle
- 13: Zapfwelle
- z10: Zahnrad
- z11: erstes Sonnenrad
- z12: zweites Sonnenrad
- z13: Zahnrad

- 20: Zwischenwelle
- 21: Bogenzahnkupplung
- 22: hydrostatische Einheit
- 23: Triebflansch
- 24: Kolben
- 25: Kolbengehäuse
- 27: Schwenklasche
- 28: Stellachse
- z20: Zahnrad

- 30: Zwischenwelle
- 31: Bogenzahnkupplung
- 32: hydrostatische Einheit
- 33: Triebflansch
- 34: Kolben
- 35: Kolbengehäuse
- 36: Schwenkgehäuse
- 37: Schwenklasche
- 38: Stellachse
- 39: Kupplung
- z30: Zahnrad
- z31: Zahnrad

- 40: Ausgangswelle
- z40: Zahnrad

- 50: zusammengesetztes Planetengetriebe
- 51: Planetenachse
- 53: Hohlrad
- 54: Planetenträger
- z51: Planetenrad (erste Stufe)
- z52: Planetenrad (zweite Stufe)
- z53: Zahnkranz
- z54: Zahnkranz

- 60: Helmholtz-Resonator
- 61: Drehdurchführung
- 62: Drehzapfen
- 63: Formplatte
- 64: untere Zugangsöffnung
- 65: seitliche Zugangsöffnung
- 66: Hydraulikvolumen
- 67: Stichkanal
- 68: lange Versorgungsleitung
- 69: kurze Versorgungsleitung

- 70: Drehachse Kolbengehäuse
- 71: oberer Umfangsbereich
- 72: unterer Umfangsbereich
- 73: obere nierenförmige Ausnehmung
- 74: untere nierenförmige Ausnehmung
- α: Schwenkwinkel
- d: Abstand

## Patentansprüche

1. Getriebeanordnung (1) umfassend zumindest ein hydrostatisches Getriebe (3), bei dem zur Übertragung von Antriebsleistung eine als Pumpe wirkende hydrostatische Einheit (22; 32) mit einer als Motor wirkenden hydrostatischen Einheit (32; 22) hydraulisch verbunden ist,
**dadurch gekennzeichnet dass** zumindest einer die hydrostatischen Einheiten (22, 32) verbindenden Hydraulikleitung (7, 8, 68, 69) Mittel (60, 66, 67) zur Dämpfung hydraulischer Druckschwingungen zugeordnet sind, wobei die Hydraulikleitung (7, 8, 68, 69) mit einem hydraulisch wirksamen Dämpfungselement wie insbesondere einem Helmholtz-Resonator (60, 66, 67), einem Lambda/4-Schlauch, einem hydraulischen Federspeicher, einem aktiven Dämpfer oder dergleichen, verbunden ist, und das hydraulisch wirksame Dämpfungselement (60, 66, 67) ausgelegt ist, Schwingungen zu dämpfen, deren halbe Wellenlänge oder ein Vielfaches davon der Länge der Hydraulikleitung (7, 8) zwischen den beiden hydrostatischen Einheiten (22, 32) entspricht.

2. Getriebeanordnung nach Anspruch 1, **dadurch gekennzeichnet, dass** zumindest eine der hydrostatischen Einheiten (22, 32) als Axialkolbenmaschine mit veränderlichem Förder- und/oder Schluckvolumen ausgeführt ist.

3. Getriebeanordnung nach Anspruch 2, **dadurch gekennzeichnet, dass** zumindest eine hydrostatische Einheit in Schrägscheibenbauart mit einer Schrägscheibe ausgeführt ist, die sich zur Veränderung des Förder- und/oder Schluckvolumens der hydrostatischen Einheit gegenüber deren Gehäuse um eine Achse schwenken lässt, wobei das hydraulisch wirksame Dämpfungselement vorzugsweise in das Gehäuse der hydrostatischen Einheit integriert oder an dieses angebaut ist.

4. Getriebeanordnung nach Anspruch 2 oder 3, **dadurch gekennzeichnet, dass** zumindest eine hydrostatische Einheit (22, 32) in Schrägachsbauart mit einem Schwenkgehäuse (26, 36) ausgeführt ist, das sich zur Veränderung des Förder- und/oder Schluckvolumens der hydrostatischen Einheit (22, 32) um eine Achse (28, 38) schwenken lässt.

5. Getriebeanordnung nach Anspruch 3, **dadurch gekennzeichnet, dass** die Axialkolbenmaschine (22, 32) ein mit Zylinderbohrungen versehenes drehbares Kolbengehäuse (25, 35) sowie darin eingesetzte Kolben (24, 34) umfasst, die mit einer radförmigen Triebflanschscheibe (23, 33) verbunden sind, wobei eine Drehachse (70) des Kolbengehäuses (25, 35) mit einer Drehachse (20, 30) der Triebflanschscheibe (23, 33) jeweils einen Schwenkwinkel (α) bildet, der sich durch Verschwenken eines das Kolbengehäuse (25, 35) aufnehmenden Schwenkgehäuses (26, 36) um eine Schwenkachse (28, 38) verändern lässt, um das Förder- und/oder Schluckvolumen der hydrostatischen Einheit (22, 32) zu verändern.

6. Getriebeanordnung nach Anspruch 4 oder 5, **dadurch gekennzeichnet, dass** die Hydraulikleitung (7, 8, 68, 69) abschnittsweise durch das Schwenkgehäuse (26, 36) einer hydrostatischen Einheit (22, 32) verläuft und das hydraulisch wirksame Dämpfungselement (60, 66, 67) innerhalb des Schwenkgehäuses (26, 36) mit der Hydraulikleitung (7, 8, 68, 69) verbunden ist.

7. Getriebeanordnung nach einem der Ansprüche 1 bis 6, **dadurch gekennzeichnet, dass** das hydraulisch wirksame Dämpfungselement (60, 66, 67) am oder zumindest nahe einem der hydrostatischen Einheit (22, 32) zugewandten Ende (74) der Hydraulikleitung (7, 8) mit dieser verbunden ist.

8. Getriebeanordnung nach einem der Ansprüche 4 bis 7, **dadurch gekennzeichnet, dass** das hydraulisch wirksame Dämpfungselement (60, 66, 67) integraler Bestandteil des Schwenkgehäuses (26, 36) ist, insbesondere indem das Schwenkgehäuse (26, 36) mit integriertem Dämpfungselement (60, 66, 67) als ein Gussteil hergestellt ist.

9. Getriebeanordnung nach einem der Ansprüche 1 bis 8, **dadurch gekennzeichnet, dass** das hydraulisch wirksame Dämpfungselement (60, 66, 67) durch ein mit der Hydraulikleitung (7, 8, 68, 69) verbundenes Hydraulikvolumen (66, 67) gebildet wird, das von einem Hohlkörper, insbesondere einem Teil des Schwenkgehäuses (26, 36) eingeschlossen wird.

10. Getriebeanordnung nach einem der vorigen Ansprüche, **dadurch gekennzeichnet, dass** das hydrostatische Getriebe (3) zwei hydrostatische Einheiten (22, 32) aufweist, die über parallele Hydraulikleitungen (7, 8) zu einem Hydraulikreis mit einer Hochdruckseite und einer Niederdruckseite miteinander verbunden sind, wobei die hydrostatischen Einheiten (22, 32) vorzugsweise so gestaltet sind, dass sich das hydrostatische Getriebe (3) mit umkehrbarer hydraulischer Flussrichtung betreiben lässt, wozu die Zuordnung der beiden hydrostatischen Einheiten (22, 32) zwischen Pumpe und Motor umkehrbar ist.

11. Getriebeanordnung nach einem der vorigen Ansprüche, **dadurch gekennzeichnet, dass** zumindest einer der hydrostatischen Einheiten (22, 32), vorzugsweise beiden hydrostatischen Einheiten (22, 32), ein eigenes Schwenkgehäuse (26, 36) zugeordnet ist, so dass sich deren Förder- und/oder Schluckvolumen einzeln verstellen lässt.

12. Getriebeanordnung nach einem der Ansprüche 1 bis 10, **dadurch gekennzeichnet, dass** die hydrostatischen Einheiten einem gemeinsamen Schwenkgehäuse zugeordnet sind, so dass sich ein Förder- und/oder Schluckvolumen der hydrostatischen Einheiten (22, 32) gemeinsam verstellen lässt.

13. Getriebeanordnung nach einem der Ansprüche 1 bis 11, **dadurch gekennzeichnet, dass** das hydrostatische Getriebe (3) eine Lagerbrücke (4) umfasst, welche die hydrostatischen Einheiten (22, 32) in vorzugsweise achsparalleler Ausrichtung mit einem Abstand (d) zueinander aufnimmt.

14. Getriebeanordnung nach Anspruch 13, **dadurch gekennzeichnet, dass** die Hydraulikleitung (7, 8) bereichsweise als in die Lagerbrücke (4) des hydrostatischen Getriebes (3) eingegossene Leitung ausgeführt ist.

15. Getriebeanordnung nach einem der vorigen Ansprüche, **dadurch gekennzeichnet, dass** diese neben dem hydrostatischen Getriebe (3) ein leistungsverzweigtes mechanisches Getriebe (2) aufweist, das mit dem hydrostatischen Getriebe (3) zusammenwirkt, um eine hydromechanische Getriebeanordnung (1) zu bilden.

16. Getriebeanordnung nach Anspruch 15, **dadurch gekennzeichnet, dass** jede der hydrostatischen Einheiten (22, 32) vorzugsweise über ein Kupplungselement, insbesondere über eine Bogenzahnkupplung (21, 31), mit einer Welle (20, 30) des leistungsverzweigten mechanischen Getriebes (2) antriebsverbunden ist.

17. Getriebeanordnung nach einem der Ansprüche 15 oder 16, **dadurch gekennzeichnet, dass** sich die hydromechanische Getriebeanordnung (1) von einem ersten Übersetzungsbereich in einen zweiten Übersetzungsbereich bringen lässt, wobei sich der Leistungsfluss des hydrostatischen Getriebes (3) bei einem Wechsel zwischen den Übersetzungsbereichen umkehrt.

## Claims

1. A transmission assembly (1) comprising at least one hydrostatic transmission (3), in which a hydrostatic unit (22; 32) operating as a pump is hydraulically connected to a hydrostatic unit (32; 22) operating as a motor in order to transmit drive power;
**characterized in that** at least one of the hydraulic lines (7, 8, 68, 69) connecting the hydrostatic units (22, 32) is/are associated with means (60, 66, 67) for damping hydraulic oscillations in pressure, wherein the hydraulic line (7, 8, 68, 69) is connected to a hydraulically effective damping element such as, in particular, a Helmholtz resonator (60, 66, 67), a lambda/4-hose, a hydraulic spring-loaded mechanism, an active damping element or the like, and the hydraulically effective damping element (60, 66, 67) is designed to damp oscillations the half wavelength of which, or a multiple thereof, corresponds to the length of the hydraulic line (7, 8) between the two hydrostatic units (22, 32).

2. The transmission assembly according to claim 1, **characterized in that** at least one of the hydrostatic units (22, 32) is configured as an axial piston machine having a variable displacement volume and/or variable intake volume.

3. The transmission assembly according to claim 2, **characterized in that** at least one hydrostatic unit is of swash plate construction having a swash plate, which enables pivoting about an axis relative to the housing thereof in order to vary the displacement volume and/or intake volume of the hydrostatic unit, wherein the hydraulically effective damping element is preferably integrated into the housing of the hydrostatic unit or is mounted thereon.

4. The transmission assembly according to claim 2 or claim 3, **characterized in that** the at least one hydrostatic unit (22, 32) has a sloping axle construction with a pivot housing (26, 36) which enables pivoting about an axis (28, 38) in order to vary the displacement volume and/or the intake volume of the hydrostatic unit (22, 32).

5. The transmission assembly according to claim 3, **characterized in that** the axial piston machine (22, 32) comprises a rotatable piston housing (25, 35) provided with cylinder bores as well as pistons (24, 34) inserted therein, which are connected to a wheel-shaped drive flange disk (23, 33), wherein an axis of rotation (70) of the piston housing (25, 35) respectively forms a pivot angle (α) with an axis of rotation (20, 30) of the drive flange plate (23, 33), which is varied by pivoting a pivot housing (26, 36) which accommodates the piston housing (25, 35) about a pivot axis (28, 38), in order to change the displacement volume and/or intake volume of the hydrostatic unit (22, 32).

6. The transmission assembly according to claim 4 or claim 5, **characterized in that** the hydraulic line (7, 8, 68, 69) extends, in sections, through the pivot housing (26, 36) of a hydrostatic unit (22, 32) and the hydraulically effective damping element (60, 66, 67) is connected to the hydraulic line (7, 8, 68, 69) within the pivot housing (26, 36).

7. The transmission assembly according to one of claims 1 to 6, **characterized in that** the hydraulically effective damping element (60, 66, 67) is connected to or at least close to an end (74) of the hydraulic line (7, 8) facing the hydrostatic unit (22, 32).

8. The transmission assembly according to one of claims 4 to 7, **characterized in that** the hydraulically effective damping element (60, 66, 67) is an integral component of the pivot housing (26, 36), in particular in which the pivot housing (26, 36) with the integrated damping element (60, 66, 67) is produced as a cast part.

9. The transmission assembly according to one of claims 1 to 8, **characterized in that** the hydraulically effective damping element (60, 66, 67) is formed by a hydraulic volume (66, 67) which is connected to the hydraulic line (7, 8, 68, 69) and is enclosed by a hollow body, in particular by a part of the pivot housing (26, 36).

10. The transmission housing according to one of the preceding claims, **characterized in that** the hydrostatic transmission (3) has two hydrostatic units (22, 32) which are connected to one another via parallel hydraulic lines (7, 8) in order to form a hydraulic circuit having a high pressure side and a low pressure side, wherein the hydrostatic units (22, 32) are preferably configured in a manner such that the hydrostatic transmission (3) can be operated with a reversible direction of hydraulic flow, for the purposes of which the assignment of the two hydrostatic units (22, 32) as pump and motor can be reversed.

11. The transmission assembly according to one of the preceding claims, **characterized in that** a separate pivot housing (26, 36) is associated with at least one of the hydrostatic units (22, 32), preferably both of the hydrostatic units (22, 32), so that their displacement volume and/or intake volume can be individually adjusted.

12. The transmission assembly according to one of claims 1 to 10, **characterized in that** the hydrostatic units are associated with a common pivot housing, so that a displacement volume and/or intake volume of the hydrostatic units (22, 32) can be adjusted jointly.

13. The transmission assembly according to one of claims 1 to 11, **characterized in that** the hydrostatic transmission (3) comprises a bearing bridge (4) which accommodates the hydrostatic units (22, 32), preferably in an axially parallel orientation and with a distance (d) between them.

14. The transmission assembly according to claim 13, **characterized in that** the hydraulic line (7, 8) is configured, in regions, as a line cast in the bearing bridge (4) of the hydrostatic transmission (3).

15. The transmission assembly according to one of the preceding claims, **characterized in that** in addition to the hydrostatic transmission (3), it further comprises a power-split mechanical transmission (2) which cooperates with the hydrostatic transmission (3) in order to form a hydromechanical transmission assembly (1).

16. The transmission assembly according to claim 15, **characterized in that** each of the hydrostatic units (22, 32) is drivably connected to a shaft (20, 30) of the power-split mechanical transmission (2), preferably via a coupling element, in particular via a curved teeth coupling (21, 31).

17. The transmission assembly according to claim 15 or claim 16, **characterized in that** the hydromechanical transmission assembly (1) can be brought from a first gear ratio range into a second gear ratio range, wherein the power flow of the hydrostatic transmission (3) is reversed in the event of a shift between the gear ratio ranges.

## Revendications

1. Agencement de transmission (1) comprenant au moins une boîte de vitesses hydrostatique (3) dans laquelle, pour transmettre de la puissance d'entraînement, une unité hydrostatique (22 ; 32) faisant fonction de pompe est reliée hydrauliquement à une unité hydrostatique (32, 22) faisant fonction de moteur,
**caractérisé en ce qu'**à au moins une conduite hydraulique (7, 8, 68, 69) reliant les unités hydrostatiques (22, 32) sont associés des moyens (60, 66, 67) pour amortir des oscillations de pression hydraulique, la conduite hydraulique (7, 8, 68, 69) étant reliée à un élément amortisseur à action hydraulique comme en particulier un résonateur de Helmholtz (60, 66, 67), un flexible lambda/4, un accumulateur à ressort hydraulique, un amortisseur actif ou analogues, et l'élément amortisseur à action hydraulique (60, 66, 67) est conçu pour amortir les oscillations dont la demi-longueur d'onde ou un multiple de celle-ci correspond à la longueur de la conduite hydraulique (7, 8) entre les deux unités hydrostatiques (22, 32).

2. Agencement de transmission selon la revendication 1, **caractérisé en ce qu'**au moins une des unités hydrostatiques (22, 32) est conçue sous la forme d'une machine à piston axial à volume de refoulement et/ou d'absorption variable.

3. Agencement de transmission selon la revendication 2, **caractérisé en ce qu'**au moins une unité hydrostatique répond à une conception à disque oblique avec un disque oblique qui, pour modifier le volume de refoulement et/ou d'absorption de l'unité hydrostatique, peut pivoter autour d'un axe par rapport au carter de celle-ci, l'élément amortisseur à action hydraulique étant de préférence intégré dans le carter de l'unité hydrostatique ou monté dessus.

4. Agencement de transmission selon la revendication 2 ou 3, **caractérisé en ce qu'**au moins une unité hydrostatique (22, 32) répond à une conception à axe oblique avec un carter pivotant (26, 36) qui, pour modifier le volume de refoulement et/ou d'absorption de l'unité hydrostatique (22, 32), peut pivoter autour d'un axe (28, 38).

5. Agencement de transmission selon la revendication 3, **caractérisé en ce que** la machine à piston axial (22, 32) comprend un carter de piston rotatif (25, 35) pourvu d'alésages cylindriques ainsi que, logés à l'intérieur, des pistons (24, 34) qui sont reliés à un disque-bride d'entraînement en forme de roue (23, 33), un axe de rotation (70) du carter de piston (25, 35) formant avec l'axe de rotation (20, 30) du disque-bride d'entraînement (23, 33) respectivement un angle de pivotement (α) qui peut être modifié par pivotement, autour d'un axe de pivotement (28, 38), d'un carter pivotant (26, 36) recevant le carter de piston (25, 35) pour faire varier le volume de refoulement et/ou d'absorption de l'unité hydrostatique (22, 32).

6. Agencement de transmission selon la revendication 4 ou 5, **caractérisé en ce que** la conduite hydraulique (7, 8, 68, 69) traverse par endroits le carter pivotant (26, 36) d'une unité hydrostatique (22, 32), et l'élément amortisseur à action hydraulique (60, 66, 67) est relié à la conduite hydraulique (7, 8, 68, 69) à l'intérieur du carter pivotant (26, 36).

7. Agencement de transmission selon une des revendications 1 à 6, **caractérisé en ce que** l'élément amortisseur à action hydraulique (60, 66, 67) est relié à la conduite hydraulique (7, 8) à une ou au moins près d'une extrémité (74) de celle-ci tournée vers l'unité hydrostatique (22, 32).

8. Agencement de transmission selon une des revendications 4 à 7, **caractérisé en ce que** l'élément amortisseur à action hydraulique (60, 66, 67) fait partie intégrante du carter pivotant (26, 36), en particulier du fait que le carter pivotant (26, 36) avec l'élément amortisseur intégré (60, 66, 67) est une pièce coulée.

9. Agencement de transmission selon une des revendications 1 à 8, **caractérisé en ce que** l'élément amortisseur à action hydraulique (60, 66, 67) est formé par un volume hydraulique (66, 67) qui est relié à la conduite hydraulique (7, 8, 68, 69) et qui est inclus dans un corps creux, en particulier dans une partie du carter pivotant (26, 36).

10. Agencement de transmission selon une des revendications précédentes, **caractérisé en ce que** la boîte de vitesses hydrostatique (3) comprend deux unités hydrostatiques (22, 32) qui, par l'intermédiaire de conduites hydrauliques parallèles (7, 8), sont reliées entre elles pour former un circuit hydraulique avec un côté haute pression et un côté basse pression, les unités hydrostatiques (22, 32) étant conçues de préférence de façon que la boîte de vitesses hydrostatique (3) puisse opérer avec une direction de fluide hydraulique inversable, l'association des deux unités hydrostatiques (22, 32) étant inversable entre pompe et moteur.

11. Agencement de transmission selon une des revendications précédentes, **caractérisé en ce qu'**à au moins une des unités hydrostatiques (22, 32), de préférence aux deux unités hydrostatiques (22, 32), est associé leur propre carter pivotant (26, 36), de sorte que leur volume de refoulement et/ou d'absorption peut être réglé individuellement.

12. Agencement de transmission selon une des revendications 1 à 10, **caractérisé en ce que** les unités hydrostatiques sont associées à un carter pivotant conjoint, de sorte qu'un volume de refoulement et/ou d'absorption des unités hydrostatiques (22, 32) peut être réglé conjointement.

13. Agencement de transmission selon une des revendications 1 à 11, **caractérisé en ce que** la boîte de vitesses hydrostatique (3) comprend un pont de paliers (4) qui reçoit les unités hydrostatiques (22, 32), selon une orientation de préférence à axes parallèles, avec un écartement (d) entre elles.

14. Agencement de transmission selon la revendication 13, **caractérisé en ce que** la conduite hydraulique (7, 8) est conçue par portions sous la forme d'une conduite venue de fonderie avec le pont de paliers (4) de la boîte de vitesses hydrostatique (3).

15. Agencement de transmission selon une des revendications précédentes, **caractérisé en ce qu'**il comporte, outre la boîte de vitesses hydrostatique (3), une transmission mécanique à puissance fractionnée (2) qui coopère avec une boîte de vitesses hydrostatique (3) afin de former un agencement de transmission hydromécanique (1).

16. Agencement de transmission selon la revendication 15, **caractérisé en ce que** chacune des unités hydrostatiques (22, 32) est en liaison d'entraînement avec un arbre (20, 30) de la transmission mécanique à puissance fractionnée (2), de préférence par l'intermédiaire d'un élément de couplage, en particulier par l'intermédiaire d'un accouplement à denture bombée (21, 31).

17. Agencement de transmission selon une des revendications 15 ou 16, **caractérisé en ce que** l'agencement de transmission hydromécanique (1) peut être transféré d'un première plage de rapports de transmission vers une seconde plage de rapports de transmission, le flux de puissance de la boîte de vitesses hydrostatique (3) s'inversant en cas de changement de plage de rapports de transmission.
